Europäisches Patentamt

European Patent Office

Office européen des brevets

(19)

(11) Veröffentlichungsnummer : **0 102 512
B1**

(12) EUROPÄISCHE PATENTSCHRIFT

(45) Veröffentlichungstag der Patentschrift :
03.12.86

(21) Anmeldenummer : 83107391.1

(22) Anmeldetag : 27.07.83

(51) Int. Cl.⁴ : **B 01 F 1/00**, B 01 F 3/12

(54) Verfahren zum schnellen Auflösen von wasserlöslichen Polymeren (I).

(30) Priorität : 02.08.82 DE 3228812

(43) Veröffentlichungstag der Anmeldung :
14.03.84 Patentblatt 84/11

(45) Bekanntmachung des Hinweises auf die Patenterteilung : 03.12.86 Patentblatt 86/49

(84) Benannte Vertragsstaaten :
BE DE FR GB IT NL SE

(56) Entgegenhaltungen :
DE-A- 2 154 081
DE-A- 2 429 393
DE-A- 2 702 069
GB-A- 2 067 908
US-A- 3 282 874
US-A- 4 051 065
US-A- 4 217 145

(73) Patentinhaber : Chemische Fabrik Stockhausen
GmbH
Bäkerpfad 25
D-4150 Krefeld (DE)

(72) Erfinder : Hübner, Wolfgang, Dr. Dipl.-Chem.
Möhlenring 61
D-4152 Kempen 1 (DE)
Erfinder : Klein, Helmut, Dipl.-Chem.
Zu den Tannen 41
D-4150 Krefeld (DE)
Erfinder : Goldacker, Erhard, Dr. Dr.Ing.
Am langen Bruchbach 17
D-4005 Meerbusch (DE)
Erfinder : Schroers, Otto
Dohrhofweg 1
D-4150 Krefeld (DE)

(74) Vertreter : Klöpsch, Gerald, Dr.-Ing.
An Gross St. Martin 6
D-5000 Köln 1 (DE)

## Beschreibung

Die Erfindung betrifft ein Verfahren zum schnellen Auflösen von wasserlöslichen Polymeren.

Wasserlösliche synthetische oder natürliche Polymere werden für die verschiedensten technischen Zwecke verwendet. Besonders bekannt ist ihre Anwendung in Form von sehr verdünnten wässrigen Lösungen als Flockungs-, Sedimentations- und Entwässerungshilfsmittel sowie als Retentionshilfsmittel in der Papierindustrie.

Die Herstellung von wässrigen Lösungen dieser Polymeren, ausgehend von den handelsüblichen Pulverprodukten, erweist sich als schwierig. Bei der Berührung der feinteiligen Pulver mit Wasser entstehen gequollene Partikel, die den weiteren Auflösungsvorgang verhindern oder sehr stark erschweren. Obwohl also an sich wasserlöslich, lassen sich die festen Polymeren in Wasser nur schlecht dispergieren und neigen zur Klumpen- bzw. Agglomeratbildung. Um die Klumpen- bzw. Agglomeratbildung zu verhindern oder gebildete Agglomerate schließlich aufzulösen, ist es erforderlich, intensiv zu rühren, wozu hohe Scherkräfte erforderlich sind. Solche hohen Scherkräfte schädigen jedoch die Polymeren, indem sie einen Kettenabbau bewirken, wodurch das Polymere seine anwendungstechnische Wirksamkeit — zum Beispiel als Flockungsmittel — ganz oder teilweise einbüßt.

Man hat daher bereits versucht, solche pulverförmigen Polymere auf Umwegen in Lösung zu bringen. So wird in der US-PS 32 82 874 das pulverförmige Polymere zunächst in einer mit Wasser nicht mischbaren organischen Phase (Ölphase) dispergiert und diese Dispersion mit Wasser zu einer Wasser-in-Öl-Emulsion verarbeitet. Diese Emulsion trennt sich in eine organische Phase und eine wässrige Phase, die ein wässriges Polymergel enthält, auch dieses Gel kann nur unter intensivem Rühren, d. h. unter Anwendung hoher, das Polymere ggfs. schädigender Scherkräfte, zu einer verdünnten Polymerlösung verarbeitet werden. Die Verfahrensweise zur Herstellung der verdünnten Polymerlösung ist außerdem kompliziert.

In der DE-PS 21 54 081 wird eine rasche Auflösung des Polymeren unter Vermeidung von intensivem und/oder langem Rühren dadurch erreicht, daß man eine Wasser-in-Öl-Emulsion des Polymeren eines bestimmten Molekulargewichts von über einer Million und einer bestimmten Größe zwischen 5 nm und 5 μm, die durch Emulsionspolymerisation der entsprechenden Monomeren hergestellt worden ist, in Gegenwart eines hydrophilen Netzmittels so in Wasser eingießt, daß die Wasser-in-Öl-Emulsion in eine Öl-in-Wasser-Emulsion umgekehrt wird.

Nach dem Einrühren der Wasser-in-Öl-Emulsion des Polymeren in das vorgelegte Wasser benötigen die erhaltenen wässrigen Polymerlösungen noch eine bestimmte Reifungszeit, um ihren optimalen anwendungstechnischen Wirkungsgrad zu erreichen. Das Verfahren der DE-PS 21 54 081 beruht auf der Anwendung der an sich bekannten Phasenumkehr in Gegenwart eines Netzmittels auf an sich bekannte Wasser-in-Öl-Polymeremulsionen, die z. B. nach dem Emulsions-Polymerisationsverfahren der US-PS 32 84 393 erhältlich sind. Für das Auflösungsverfahren nach DE-PS 21 54 081 ist sowohl erfindungswesentlich, daß die Polymeremulsion zum vorgelegten Wasser zugegeben wird (und nicht umgekehrt), als auch die Anwesenheit eines Netzmittels beim Zusammenbringen von Polymeremulsion mit vorgelegtem Wasser. Nur wenn diese beiden Bedingungen erfüllt sind, wird die angestrebte rasche Auflösung erhalten. Verfährt man umgekehrt, dosiert man also Wasser zur vorgelegten Wasser-in-Öl-Emulsion des Polymeren, so erhält man eine hochviskose, gelartige Lösung, die auch bei weiterer Wasserzugabe nur schwierig aufzulösen ist. Es muß vielmehr zur Auflösung intensiv über eine längere Zeit gerührt werden. Ebensowenig erhält man eine rasche Auflösung, wenn man die Polymeremulsion dem Wasser in Abwesenheit eines Netzmittels zusetzt. Bei technisch üblichen Anlagen, in denen große Mengen von Emulsionen hochmolekularer Polymerer in Lösung gebracht werden müssen, ist es nachteilig, daß, durch die Gegenwart von Netzmitteln bedingt, die Phasenumkehr der Emulsion vor der erforderlichen gleichmäßigen Verteilung der viskosen Polymerisat-Emulsion im Lösewasser eintreten kann, was zu Inhomogenitäten durch Klumpenbildung in der Lösung führt, wobei diese Anteile nur stark verzögert in Lösung gehen.

Es wurde nun gefunden, daß man entgegen der Lehre der DE-PS 21 54 081 auch dann in kurzer Zeit optimal wirksame wässrige Lösungen der Polymeren erhalten kann, wenn man in eine vorgelegte Wasser-in-Öl-Emulsion des Polymeren oder auch in eine Suspension des pulverförmigen Polymeren in einer hydrophoben Phase Wasser einbringt und erst nach Verdünnung der Emulsion bzw. Suspension das hydrophile Netzmittel zugibt.

Die erfindungsgemäße Arbeitsweise war deswegen nicht naheliegend, weil es technisch schwierig ist, eine vergleichsweise große Wassermenge möglichst rasch in eine vergleichsweise kleine Menge der Polymeremulsion oder -suspension einzubringen. Mit der erfindungsgemässen Arbeitsweise ist es möglich, in noch wesentlich kürzerer Zeit als es bisher möglich war, zu gebrauchsfertigen Lösungen, insbesondere hochmolekularer wasserlöslicher Polymerer, zu gelangen, die praktisch keine Nachreifungszeit mehr zur Entfaltung ihrer optimalen anwendungstechnischen Eigenschaften benötigen.

Das Wasser wird vorteilhaft mit einem Druck von mindestens 4 bar eingebracht. Das Einmischen des Wassers in die Polymeremulsion kann durch Rühren oder Eindüsen des Wassers erfolgen. Dabei hat es sich als besonders vorteilhaft erwiesen, das Wasser tangential zur Oberfläche des vorgelegten Polymeren zuzudüsen, wodurch eine sehr gute Durchmischung erzielt wird.

Als Polymere sind für die Zwecke der Erfindung die bekannten wasserlöslichen synthetischen oder natürlichen Produkte geeignet, zum Beispiel Polymere und Copolymere der Acrylsäure, des Acrylamids, der Methacrylsäure, des Methacrylamids, des Vinylpyrrolidons, des Acroleins, der Vinylgruppen enthaltenden quartären Ammoniumsalze sowie natürliche Gummen. Solche Produkte sind entweder als Pulver oder auch als Wasser-in-Öl-Emulsionen im Handel.

Als hydrophile Netzmittel, die die Waser-in-Öl-Emulsion oder die Suspension des pulverförmigen Polymeren in Öl zu einer Öl-in-Wasser-Emulsion umkehren, sind ebenfalls bekannte Produkte geeignet. Das verwendete Netzmittel ist hydrophil und wasserlöslich. Es wird in Mengen von 0,01 bis 20 %, bezogen auf das Polymere, eingesetzt, wobei für praktische Zwecke Netzmittelmengen von 1,0 bis 10 % ausreichen.

Als Netzmittel können verwendet werden : oxethylierte Alkylphenole, z. B. Nonylphenol-9-EO, Na- oder K-Seifen höherer Fettsäuren, Fettalkoholsulfate, Alkylsulfonate, Alkylarylsulfonate, sulfatierte und sulfonierte Öle, z. B. sulfatiertes Rizinusöl etc.

Das Netzmittel kann entweder nach Beendigung der Wasserzugabe oder auch kurz davor entweder getrennt oder zusammen mit dem eingedüsten Wasser sowie in Teilmengen während der Wasserzugabe zugesetzt werden.

Die Erfindung wird durch die folgenden Beispiele erläutert :

Beispiel 1

19,40 g eines anionischen E-Polymerisats (65 Mol-% Acrylamid, 35 Mol-% Natriumacrylat, Polymerisatanteil 25 %), werden in einem 2 l Becherglas vorgelegt. Auf das Produkt werden 800 g Wasser gegeben und unter Rühren wird eine milchig trübe Flüssigkeit gebildet. Die Viskosität der Flüssigkeit beträgt 1 120 mPa.s (Brookfield Viskosität, 20 °C). Die Flüssigkeit wird unter fortdauerndem Rühren mit 2 g Nonylphenol-9-EO und anschliessend mit 178,6 g Wasser versetzt. Das in der Flüssigkeit enthaltende Polymerisat löst sich dabei rasch unter starkem Viskositätsanstieg der Flüssigkeit auf. Die 0.5 %ige polymerisathaltige Lösung zeigt eine Viskosität von 6 600 mPa · s. Der anschließend durchgeführte Flockungstest an einer wässrigen Tonsuspension (18 g Blauton Witterschlick/l) ergibt bei Zusatz von 1 ppm Polymerisat einen Flockungswert von 4 sec.

Beispiel 2

Ein 4 m³-Lösebehälter mit Rührwerk wird mit 38,86 kg eines kationisch wirksamen Emulsionspolymerisats, Gehalt an Polymerisat 38,6 %, Anteil des kationischen Monomeren 70 Gew.-%, beschickt. Danach werden durch einen Wasserzulauf von oben 2 000 l Wasser auf das Emulsionspolymerisat gegeben. Es bildet sich eine milchig trübe Flüssigkeit mit einer Viskosität von 5 mPa · s. Anschliessend wird die Flüssigkeit mit 4,0 kg Nonylphenol-9-EO sowie mit 957 l Wasser versetzt. Es entsteht eine 0,5 %ige homogene Lösung des Polymerisats. Die Viskosität der Lösung beträgt 1 160 mPa · s.

Beispiel 3

2,33 kg eines kationisch wirksamen Emulsionspolymerisats mit einem Gehalt von 38,6 % Polymerisat, das einen Anteil von 70 Gew.% kationischen Monomerengruppen enthält, werden in einen 0,5 m³ Lösebehälter gegeben. Der Zusatz von insgesamt 295,4 l Lösewasser erfolgt von oben durch ein Fallrohr und unter einem Druck von 18 bar aus 4 Düsen, die 25 cm über dem Gefäßboden an einer ringförmigen Wasserzuleitung tangential zur Flüssigkeitsoberfläche angebracht sind. Während des Wasserzulaufs erfolgt auf diese Weise eine gute Durchmischung der Komponenten. Nach Zulauf von 150 l Lösewasser werden 2,3 kg Nonylphenol-9-EO als Netzmittel mit der restlichen Wassermenge zugesetzt. Es bildet sich ca. 2 Minuten nach Versuchsbeginn eine 0,3 %ige, homogene Polymerisatlösung mit einer Viskosität von 390 mPa · s. Die Lösung besitzt bei Zugabe von 2 ppm Polymerisat einen Flockungswert von 5 sec.

**Patentansprüche**

1. Verfahren zum schnellen Auflösen von wasserlöslichen Polymeren durch Vermischen des Polymeren mit Wasser unter Verwendung von 0,01 bis 20 %, bezogen auf das Polymere, eines hydrophilen Netzmittels, dadurch gekennzeichnet, dass man in das vorgelegte, netzmittelfreie Polymere in Form einer W/O-Emulsion oder einer Pulver-in-Öl-Suspension Wasser unter üblichen Mischbedingungen einbringt und nach Verdünnung des vorgelegten Polymeren mit Wasser das Netzmittel zusetzt.

2. Verfahren nach Anspruch 1, dadurch gekennzeichnet, daß man das Wasser mit einem Druck von mindestens, 2 vorzugsweise mit 15 bis 80 bar zugibt.

3. Verfahren nach einem der Ansprüche 1 oder 2, dadurch gekennzeichnet, daß man das Wasser mit Hilfe einer Düse einbringt.

4. Verfahren nach einem der Ansprüche 1 bis 3, dadurch gekennzeichnet, daß man das Wasser tangential zur Oberfläche des vorgelegten Polymeren zugibt.

5. Verfahren nach einem der Ansprüche 1 bis 4, dadurch gekennzeichnet, daß man das Netzmittel kurz vor Beendigung der Wasserzugabe dem eingedüsten Wasser zusetzt.

**Claims**

1. Process for the rapid dissolution of water soluble polymers by mixing the polymer with water using from 0,01 to 20 %, related to the polymer, of a hydrophilic wetting agent, characterized in that water is added under conventional mixing conditions to the prepared wetting agent-free polymer in the form of a water-in-oil emulsion or a powder-in-oil suspension and the wetting agent is added after dilution of the prepared polymer with water.

2. Process according to claim 1, characterized in that the water is added at a pressure of at least 2, preferably at 15 to 80 bar.

3. Process according to claim 1 or 2, characterized in that the water is added through a nozzle.

4. Process according to claim 1, 2 or 3, characterized in that the water is added tangentially to the surface of the prepared polymer.

5. Process according to claim 1, 2, 3 or 4, characterized in that the wetting agent is added to the water being added through a nozzle shortly before the water addition is finished.

**Revendications**

1. Procédé pour la dissolution rapide de polymères hydrosolubles par mélange du polymère et d'eau en présence de 0,01 à 20 % par rapport au polymère d'un mouillant hydrophile, caractérisé en ce que l'on ajoute de l'eau, dans des conditions de mélange usuelles, au polymère exempt de mouillant sous forme d'une émulsion eau-dans-huile ou d'une suspension poudre-dans-huile et après dilution du polymère par de l'eau, on ajoute l'agent mouillant.

2. Procédé suivant la revendication 1, caractérisé en ce que l'addition de l'eau est effectuée sous une pression d'au moins 2 bars et de préférence de 15 à 80 bars.

3. Procédé suivant l'une des revendications 1 et 2, caractérisé en ce que l'eau est ajoutée à l'aide d'une tuyère.

4. Procédé suivant l'une des revendications 1 à 3, caractérisé en ce que l'eau est ajoutée tangentiellement à la surface du polymère.

5. Procédé suivant l'une des revendications 1 à 4, caractérisé en ce que l'agent mouillant est incorporé à l'eau injectée un peu avant la fin de l'addition de l'eau.